# DEMANDE DE BREVET EUROPEEN

(11) **EP 4 682 721 A1**
(43) Date de publication de la demande: **21.01.2026**
(21) Numéro de dépôt: 25186076.3
(22) Date de dépôt: 27.06.2025
(51) Int. Cl.: G06F 9/50, G06F 11/30

(54) **PROCÉDÉ ET DISPOSITIF DE DÉTERMINATION D'UN TAUX D'UTILISATION D'UN ENSEMBLE D APPLICATIONS D'UNE CATÉGORIE D APPLICATIONS DURANT UN TRAJET EFFECTUÉ PAR UN VÉHICULE**

(30) Priorité: 16.07.2024 FR 2407798
(71) Demandeur: Stellantis Auto SAS, 78300 Poissy (FR); FCA US LLC, Auburn Hills, MI 48326-2766 (US)
(72) Inventeur: GASSAMA, MOUSTAPHA, 78260 ACHERES (FR); LESCAUT, ANTOINE, 91190 GIF SUR YVETTE (FR)
(74) Mandataire: ESIP

(57) **Abrégé**

La présente invention concerne un procédé et un dispositif de détermination d'un taux d'utilisation d'un ensemble d'applications mobiles durant un trajet effectué par un véhicule (10), un dispositif mobile (101) étant relié en communication avec un système d'infodivertissement, dit système IVI, du véhicule. En effet, le procédé comprend l'incrémentation d'un premier compteur temporel au début du trajet, la réception d'au moins une requête d'attribution d'une ressource du système IVI depuis une application mobile de l'ensemble d'applications mobiles pour partager des données entre l'application mobile et le système IVI et l'incrémentation d'un deuxième compteur temporel à l'attribution de la ressource à l'application mobile. Les incrémentations des deuxième et premier compteurs temporels sont arrêtées à la réception d'une fin d'attribution de la ressource à l'application mobile et d'une fin du trajet. Le taux d'utilisation est alors déterminé à partir des premier et deuxième compteurs temporels.

## Description

### Domaine technique

L'invention concerne les procédés et dispositifs de détermination d'un taux d'utilisation d'un ensemble d'applications d'une catégorie d'applications durant un trajet effectué par un véhicule, notamment mais non exclusivement un véhicule automobile.

### Arrière-plan technologique

De nos jours, de nombreux véhicules proposent des systèmes d'aide à la conduite et/ou d'infodivertissement embarqués. Ces systèmes embarqués permettent, par exemple, de guider le conducteur d'un véhicule à l'aide d'un système de navigation ou de guidage à l'aide d'informations de géolocalisation et de cartographie reçues de capteurs embarqués et/ou de serveurs, ou encore d'interagir avec les systèmes embarqués et de diffuser du contenu multimédia comme des vidéos ou des sons via des écrans ou des haut-parleurs embarqués dans le véhicule.

De nombreux utilisateurs de véhicules disposent de dispositifs mobiles tels que des téléphones intelligents ou des tablettes. Ces dispositifs mobiles permettent le plus souvent de réaliser certaines des fonctions assurées par les systèmes embarqués des véhicules et ce de manière autonome, voire de proposer des applications différentes de celles embarquées dans le véhicule.

Afin de disposer de ressources présentes dans le véhicule, par exemple d'un écran, d'un système de diffusion audio ou encore d'un microphone, des applications de duplication de périphériques sont de plus en plus présentes dans les dispositifs mobiles et les véhicules. En effet, les ressources précitées du véhicule présentent de nombreux avantages, par exemple un écran est de grande taille et idéalement placé pour qu'un occupant du véhicule le voit et puisse interagir facilement s'il est tactile, des haut-parleurs sont disposés en de multiples endroits de l'habitacle permettant une diffusion sonore homogène, ou encore le microphone est placé en face du visage du conducteur pour mieux capter sa voix.

Néanmoins, l'utilisation d'applications installées sur le dispositif mobile et utilisant les ressources du véhicule, aussi appelée « mirroring » (en français « effet miroir ») ou « screen mirroring » (en français « duplication d'écran ») dans le cas d'un partage d'écran, sont parfois redondantes avec les applications du système embarqué du véhicule. De plus, l'amélioration de l'interface permettant l'utilisation des ressources véhicule par les applications installées sur le dispositif mobile nécessite une connaissance approfondie des pratiques des différents utilisateurs.

### Résumé de la présente invention

Un objet de la présente invention est de résoudre au moins l'un des problèmes de l'arrière-plan technologique décrit précédemment.

Un objet de la présente invention est d'évaluer le taux d'utilisation de certaines applications faisant appel à une duplication de ressource.

Un autre objet de la présente invention est d'améliorer la connaissance des pratiques des utilisateurs quant à l'utilisation d'applications faisant appel à une duplication de ressource.

Selon un premier aspect, la présente invention concerne un procédé de détermination d'un taux d'utilisation d'un ensemble d'applications mobiles appartenant à une même catégorie d'applications mobiles durant un trajet effectué par un véhicule, un dispositif mobile étant relié en communication avec un système d'infodivertissement, dit système IVI, du véhicule, le dispositif mobile étant configuré pour exécuter des applications de l'ensemble d'applications mobiles,
le procédé étant mis en œuvre par au moins un processeur et étant caractérisé en ce qu'il comprend les étapes suivantes :
- réception de premières données représentatives d'un début du trajet et incrémentation d'un premier compteur temporel associé au trajet ;
- réception de deuxièmes données représentatives d'au moins une requête d'attribution d'une ressource du système IVI à une application mobile de l'ensemble d'applications mobiles pour partager des données entre l'application mobile et le système IVI ;
- attribution de la ressource à l'application mobile et incrémentation d'un deuxième compteur temporel associé à la catégorie d'applications mobiles ;
- réception de troisièmes données représentatives d'une fin d'attribution de la ressource à l'application mobile et arrêt de l'incrémentation du deuxième compteur temporel ;
- réception de quatrièmes données représentatives d'une fin du trajet et arrêt de l'incrémentation du premier compteur temporel ;
- détermination du taux d'utilisation à partir des premier et deuxième compteurs temporels.

La connaissance du taux d'utilisation d'applications de l'ensemble d'applications permet alors de connaître les attentes des utilisateurs quant à l'utilisation de ces applications. Un taux élevé d'utilisation de ces applications révèle également un manque dans l'offre d'applications directement installées dans le système IVI du véhicule et donc un axe de développement de cette catégorie d'application, par exemple par le constructeur du véhicule ou un équipementier développant le système IVI.

Selon une variante, le procédé comprend en outre une transmission du taux d'utilisation et/ou des premier et deuxième compteurs temporels à destination d'un serveur distant.

Selon une autre variante, lorsque les deuxièmes données sont représentatives d'une pluralité de requêtes d'attribution d'une ressource du système IVI, les étapes d'attribution de la ressource et de réception de troisièmes données sont répétées pour chaque requête de la pluralité.

Selon encore une variante, la catégorie d'applications appartient à un ensemble de catégories d'applications comprenant :
- une catégorie d'applications associées à une navigation,
- une catégorie d'applications associées à une diffusion d'un contenu médiatique vidéo et/ou audio,
- une catégorie d'applications associées à une reconnaissance vocale.

Selon une variante supplémentaire, les ressources appartiennent à un ensemble de ressources comprenant :
- un écran tactile,
- un système de diffusion audio,
- un microphone.

Selon une autre variante, le procédé comprend en outre les étapes suivantes :
- réception de cinquièmes données représentatives d'une requête de préemption de la ressource depuis le système IVI ;
- attribution de la ressource au système IVI et arrêt de l'incrémentation du deuxième compteur temporel ;
- réception de sixièmes données représentatives d'une fin d'attribution de la ressource au système IVI ;
- réattribution de la ressource à l'application mobile et incrémentation du deuxième compteur temporel.

Selon un deuxième aspect, la présente invention concerne un dispositif de détermination d'un taux d'utilisation d'un ensemble d'applications d'une catégorie d'applications durant un trajet effectué par un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un système comprenant le véhicule tel que décrit ci-dessus selon le troisième aspect de la présente invention et un dispositif de communication mobile relié en communication au véhicule selon un mode de duplication d'écran.

Selon un cinquième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

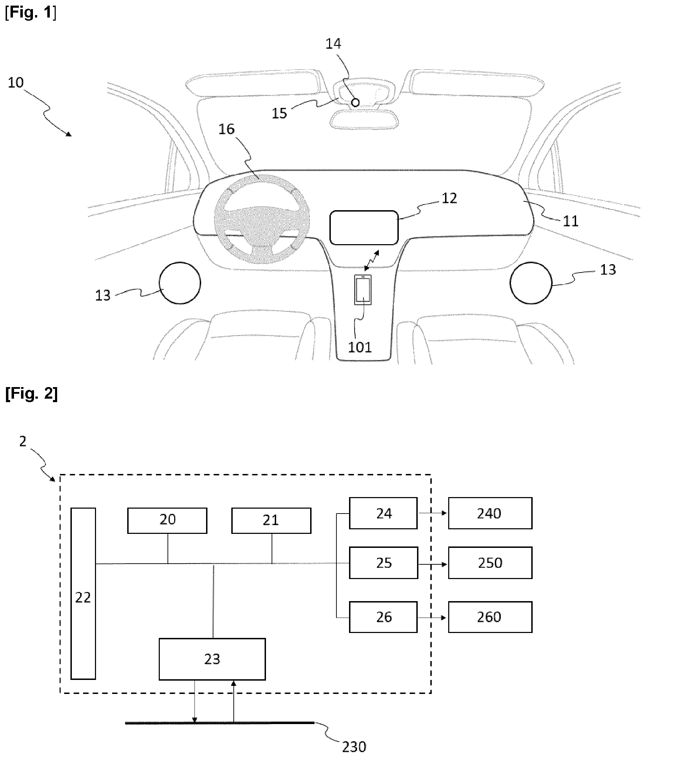

D'autres caractéristiques et avantages de la présente invention ressortiront de la description des exemples de réalisation particuliers et non limitatifs de la présente invention ci-après, en référence aux figures 1 à 5 annexées, sur lesquelles :
[Fig. 1] illustre schématiquement une partie d'un habitacle d'un véhicule, selon un exemple de réalisation particulier de la présente invention ;
[Fig. 2] illustre un dispositif configuré pour déterminer un taux d'utilisation d'un ensemble d'applications d'une catégorie d'applications durant un trajet effectué par le véhicule de la figure 1, selon un exemple de réalisation particulier et non limitatif de la présente invention ;

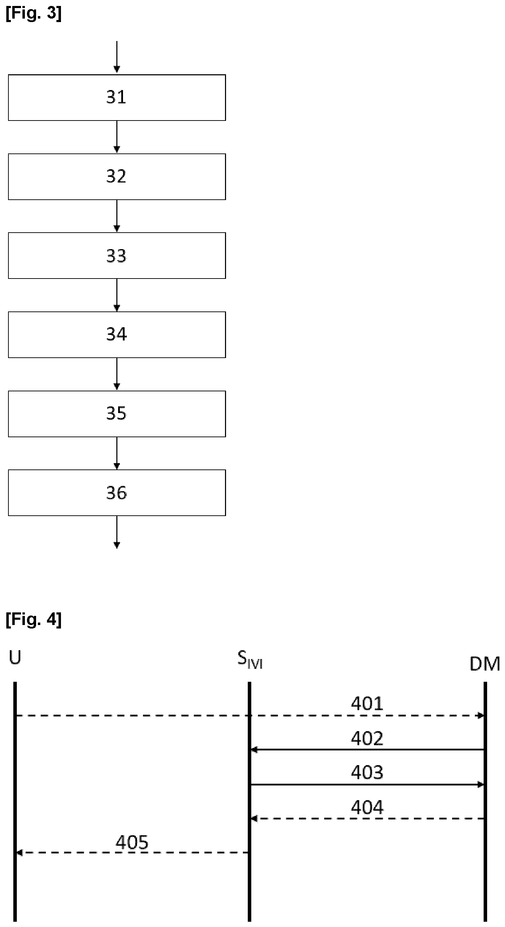

[Fig. 3] illustre un organigramme des différentes étapes d'un procédé de détermination d'un taux d'utilisation d'un ensemble d'applications d'une catégorie d'applications durant un trajet effectué par le véhicule de la figure 1, selon un exemple de réalisation particulier et non limitatif de la présente invention ;
[Fig. 4] illustre un diagramme d'échange de données lors d'un processus de détermination d'un taux d'utilisation d'un ensemble d'applications d'une catégorie d'applications durant un trajet effectué par le véhicule de la figure 1, selon un premier exemple de réalisation particulier et non limitatif de la présente invention ; et

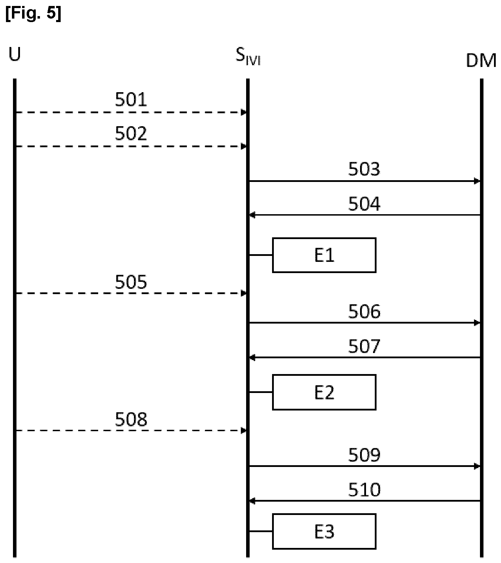

[Fig. 5] illustre un diagramme d'échange de données lors d'un processus de détermination d'un taux d'utilisation d'un ensemble d'applications d'une catégorie d'applications durant un trajet effectué par le véhicule de la figure 1, selon un deuxième exemple de réalisation particulier et non limitatif de la présente invention.

### Description des exemples de réalisation

Un procédé et un dispositif de détermination d'un taux d'utilisation d'un ensemble d'applications d'une catégorie d'applications durant un trajet effectué par un véhicule vont maintenant être décrits dans ce qui va suivre en référence conjointement aux figures 1 à 5. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

La figure 1 illustre schématiquement une partie d'un habitacle d'un véhicule 10, selon un exemple de réalisation particulier et non limitatif de la présente invention.

Le véhicule 10 correspond à un véhicule à moteur thermique, à moteur(s) électrique(s) ou encore un véhicule hybride avec un moteur thermique et un ou plusieurs moteurs électriques. Le véhicule correspond ainsi, par exemple, à un véhicule terrestre tel une automobile, un camion, un car, une moto. Enfin, le véhicule correspond à un véhicule autonome ou non, c'est-à-dire un véhicule circulant selon un niveau d'autonomie déterminé ou sous la supervision totale du conducteur.

Le véhicule 10 est configuré pour communiquer, c'est-à-dire transmettre et recevoir, des données avec un dispositif de communication mobile 101 lorsque ce dernier est relié en communication filaire (par exemple via une connexion USB (de l'anglais « Universal Serial Bus » ou « Bus Universel en Série » en français)) ou sans fil (par exemple via une connexion de type Wifi^{®} ou Bluetooth^{®}) au véhicule 10.

Le véhicule 10 embarque à cet effet un système de communication comprenant une ou plusieurs interfaces de communication sans fil et/ou une ou plusieurs interfaces de communication filaire.

La ou les interfaces de communication sans fil sont par exemple mises en œuvre par une unité de contrôle télématique, dite TCU (de l'anglais « Telematic Control Unit »). Selon une variante, la ou les interfaces de communication sans fil sont mises en œuvre par le calculateur du système d'infodivertissement, dit calculateur IVI (de l'anglais « In-Vehicle Infotainment » ou en français « Infodivertissement embarqué ») du véhicule 10, par exemple le calculateur IVI comprend une interface ou un module de communication radio (sans fil) dédié à la communication de données avec le dispositif de communication mobile 101 pour la mise en œuvre de la duplication de ressource(s).

Le véhicule 10 embarque en outre un système embarqué correspondant à un système d'affichage comprenant un ou plusieurs dispositifs d'affichage, par exemple un écran 12 à interface tactile, dit écran tactile, contrôlés par un calculateur configuré pour contrôler l'affichage de contenu(s) d'une IHM graphique notamment sur l'écran tactile 12. Le calculateur correspond par exemple au calculateur IVI du véhicule 10. La liaison entre le calculateur et l'écran tactile 12 correspond par exemple à une liaison de type LVDS (de l'anglais « Low Voltage Differential Signaling » ou en français « Transmission différentielle basse-tension »). L'écran tactile 12 est par exemple arrangé dans la planche de bord 11 du véhicule 10.

Les différents systèmes du véhicule 10 ainsi que les interfaces de communications sont chacun contrôlés par un ou plusieurs calculateurs. Ces calculateurs forment par exemple une architecture multiplexée pour la réalisation de différents services utiles pour le bon fonctionnement du véhicule et pour assister le conducteur et/ou les passagers du véhicule dans le contrôle du véhicule 10 via le contrôle du ou des systèmes embarqués dans le véhicule 10. Les calculateurs communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458), LIN (de l'anglais « Local Interconnect Network » ou en français « Réseau interconnecté local ») ou Ethernet (selon la norme ISO/IEC 802-3).

Lorsque le dispositif de communication mobile 101 est relié en communication avec le véhicule 10, par exemple avec le calculateur IVI, selon le mode de duplication de ressource(s), le contenu graphique affiché sur l'écran du dispositif de communication mobile est également affiché sur l'écran tactile 12 du véhicule 10 et/ou le contenu sonore ou audio diffusé par le dispositif de communication mobile est également diffusé via des haut-parleurs 13 du véhicule 10, et/ou les sons dans l'habitacle du véhicule 10 sont captés par un microphone du dispositif de communication mobile et également par un microphone 14 du véhicule 10, le microphone 14 du véhicule 10 étant par exemple placé dans un plafonnier 15 ou dans un volant 16 du véhicule 10.

. Selon la technologie de duplication de ressource(s), des modules logiciels configurés pour la communication de données entre le dispositif de communication mobile 101 et le véhicule 10 sont installés et exécutés sur le dispositif de communication mobile 101 et le système **IVI** du véhicule 10 pour gérer les flux de données reçues du dispositif de communication mobile 101 et les flux de données destinés au dispositif de communication mobile 101.

Le dispositif de communication mobile 101 correspond à un dispositif comprenant ses propres ressources telles qu'un écran d'affichage, par exemple tactile, et/ou un ou plusieurs haut-parleurs et/ou un microphone ainsi que des moyens de radiocommunication sans fil configurés pour communiquer avec le véhicule 10 selon un mode de communication sans fil, par exemple selon le protocole Bluetooth^{®} ou Wifi^{®}, par exemple Wifi Direct, ou selon un mode de communication filaire, par exemple USB, tel que connu de l'homme du métier.

Le dispositif de communication mobile 101 correspond ainsi par exemple à un téléphone intelligent ou à une tablette tactile.

Un ensemble d'applications mobiles sont installées sur le dispositif de communication mobile 101 pour que ce dernier puisse exécuter chacune de ces applications mobiles. Ces applications mobiles appartiennent à différentes catégories d'applications, par exemple :
- une catégorie d'applications associées à une navigation,
- une catégorie d'applications associées à une diffusion d'un contenu médiatique vidéo et/ou audio,
- une catégorie d'applications associées à une reconnaissance vocale.

Selon un exemple de réalisation particulier, des données de protocoles sont différentes selon chacune des catégories d'applications, permettant d'identifier la catégorie d'une application en cours d'exécution.

La figure 4 illustre un diagramme d'échange de données lors d'un processus de détermination d'un taux d'utilisation d'un ensemble d'applications d'une catégorie d'applications durant un trajet effectué par le véhicule de la figure 1, selon un premier exemple de réalisation particulier et non limitatif de la présente invention.

Dans une première opération (non représentée), des premières données sont reçues par le système IVI, par exemple par le calculateur du système IVI 'S_{IVI}'. Ces premières données sont représentatives d'un début d'un trajet qu'effectue le véhicule 10. Ces premières données correspondent par exemple à des données émises lors du démarrage d'un moteur du véhicule 10 ou d'une mise en tension d'une partie des systèmes embarqués du véhicule 10.

Un premier compteur temporel associé au trajet est alors incrémenté. A noter qu'il est, par exemple remis à zéro avant de démarrer l'incrémentation. Si le compteur n'est pas remis à zéro, une durée du trajet est alors déterminée ultérieurement par comparaison des valeurs de ce premier compteur temporel en début et en fin de trajet.

Dans une deuxième opération, un utilisateur 'U' active la lecture d'un contenu audio par une application en cours d'exécution sur le dispositif mobile 101 depuis une interface homme-machine associée au dispositif mobile 101, par exemple via un écran tactile 101e du dispositif mobile 101. A noter que le dispositif mobile 101 est connecté au système IVI par une liaison filaire ou sans fil, une phase d'appairage est alors réalisée antérieurement selon toute méthode connue de l'homme du métier.

Le processeur du dispositif mobile 'DM' reçoit alors des données 401 représentatives de l'appui tactile de l'utilisateur sur un objet graphique affiché sur l'écran tactile 101e et permettant d'activer la lecture du contenu audio, par exemple une musique. Selon cet exemple de réalisation particulier, l'application mobile appartient à un ensemble d'applications mobiles appartenant à une même catégorie d'applications mobiles associées à la diffusion d'un contenu audio.

Dans une troisième opération, des deuxièmes données 402 représentatives d'une requête d'attribution d'une ressource du système IVI sont reçues depuis l'application mobile en cours d'exécution sur le dispositif mobile 101, par exemple depuis le processeur 'DM' du dispositif mobile pour partager des données entre cette application mobile et le système IVI, par exemple à destination du calculateur IVI 'S_{IVI}'. Les deuxièmes données correspondent alors à une requête d'attribution des haut-parleurs 13 du véhicule 10 voire du système de diffusion audio comprenant ces haut-parleurs 13, les haut-parleurs 13 du véhicule 10 ou le système de diffusion audio étant alors la ressource du système IVI à attribuer.

A noter que les données échangées entre l'application en cours d'exécution sur le dispositif mobile 101 et le calculateur du système IVI sont par exemple échangées via des interfaces installées respectivement sur le dispositif mobile 101 et sur le système IVI, assurant alors la compatibilité des échanges entre l'application mobile en cours d'exécution sur le dispositif mobile et le système IVI. De telles interfaces sont connues de l'homme du métier telles Apple CarPlay^{®} ou Android Auto^{®}.

Dans une quatrième opération, la ressource constituée des haut-parleurs 13 du véhicule 10 ou du système de diffusion audio comprenant les haut-parleurs est attribuée à l'application mobile et des données 403 sont transmises depuis le calculateur IVI 'S_{IVI}' à destination du processeur 'DM' du dispositif mobile confirmant l'attribution de la ressource à l'application mobile en cours d'exécution sur le dispositif mobile 101. Un deuxième compteur temporel associé à la catégorie d'applications mobiles précitée est alors incrémenté. Ce deuxième compteur permet alors de compter le temps pendant lequel la ressource est attribuée à l'application mobile en cours d'exécution sur le dispositif mobile 101.

A noter que plusieurs applications de différentes catégories peuvent être installées sur le dispositif mobile 101, plusieurs deuxièmes compteurs sont alors incrémentés en fonction des applications en cours d'exécution, chaque deuxième compteur étant associé à un type de catégorie d'applications. En d'autres termes, si des applications appartenant à plusieurs catégories d'applications sont exécutées durant un même trajet du véhicule 10, alors plusieurs deuxièmes compteurs sont incrémentés durant ce trajet, chaque deuxième compteur étant incrémenté lorsqu'une application de la catégorie d'applications associée au deuxième compteur utilise une ressource du système IVI du véhicule 10.

Dans une cinquième opération, des données 404 représentatives du contenu audio sont transmises depuis le processeur 'DM' du dispositif mobile vers le calculateur IVI 'S_{IVI}', le calculateur IVI 'S_{IVI}' contrôle alors les haut-parleurs 13 du véhicule 10 via des signaux 405, lesquels génèrent via les haut-parleurs 13 un rendu audio 405 à destination de l'utilisateur 'U'.

Dans une sixième opération, des troisièmes données représentatives d'une fin d'attribution de la ressource à l'application mobile en cours d'exécution sur le dispositif mobile 101 sont reçues, elles correspondent par exemple à :
- une demande de l'utilisateur d'arrêter la diffusion du contenu audio, cette demande étant par exemple émise via l'IHM du dispositif mobile 101, ou
- une préemption de la ressource par un autre système, par exemple par un système embarqué prioritaire du véhicule 10, ou
- une désactivation du système IVI, par exemple en appuyant sur un bouton contrôlant la désactivation du système IVI uniquement ou en coupant le contact du véhicule 10 lorsque le trajet est terminé, ou
- une perte de connexion entre le dispositif mobile 101 et le système IVI.

L'incrémentation du deuxième compteur temporel est alors arrêtée. La valeur du deuxième compteur temporel est, par exemple, enregistrée dans une mémoire du système IVI.

Dans une septième opération, des quatrièmes données représentatives d'une fin du trajet sont reçues, par exemple lorsque le trajet est terminé et que le conducteur du véhicule coupe le contact ou éteint un moteur du véhicule 10.

L'incrémentation du premier compteur temporel est alors arrêtée. La valeur du premier compteur temporel est, par exemple, elle aussi enregistrée dans la mémoire du système IVI.

Optionnellement, dans une huitième opération, les valeurs des premier et deuxième compteurs temporels sont transmises à un serveur distant par le calculateur du système IVI 'S_{IVI}' via le système de communication du véhicule 10. Un tel serveur distant permet alors de récupérer et de centraliser des données représentatives de temps d'utilisation d'un ensemble d'applications mobiles appartenant à une même catégorie d'applications mobiles durant des trajets effectués par des véhicules d'un ensemble de véhicules comprenant le véhicule 10.

Dans une neuvième opération, le taux d'utilisation de l'ensemble d'applications mobiles comprenant l'application mobile en cours d'exécution sur le dispositif mobile 101 est déterminé pour le trajet effectué par le véhicule 10. Ce taux est par exemple égal au ratio entre la valeur du deuxième compteur temporel et la valeur du premier compteur temporel. Cette neuvième opération est réalisée soit par le calculateur IVI 'S_{IVI}' du véhicule 10, soit par le serveur distant si les valeurs des premier et deuxième compteurs temporels lui sont transmises durant la huitième opération.

Dans le cas où la huitième opération n'a pas été réalisée, c'est-à-dire que les valeurs des premier et deuxième compteurs temporels n'ont pas été transmises au serveur distant, le taux calculé par le calculateur IVI 'S_{IVI}' est, par exemple, transmis au serveur distant dans une dixième opération.

La figure 5 illustre un diagramme d'échange de données lors d'un processus de détermination d'un taux d'utilisation d'un ensemble d'applications d'une catégorie d'applications durant un trajet effectué par le véhicule de la figure 1, selon un deuxième exemple de réalisation particulier et non limitatif de la présente invention.

Comme pour le premier exemple de réalisation particulier, dans une première opération (non représentée), des premières données sont reçues par le système IVI, par exemple par le calculateur du système IVI 'S_{IVI}'. Ces premières données sont représentatives d'un début d'un trajet qu'effectue le véhicule 10. Ces premières données correspondent par exemple à des données émises lors du démarrage d'un moteur du véhicule 10 ou d'une mise en tension d'une partie des systèmes embarqués du véhicule 10.

Un premier compteur temporel associé au trajet est alors incrémenté. A noter qu'il est, par exemple remis à zéro avant de démarrer l'incrémentation. Si le compteur n'est pas remis à zéro, une durée du trajet est alors déterminée ultérieurement par comparaison des valeurs de ce premier compteur temporel en début et en fin de trajet.

Dans une deuxième opération, un utilisateur 'U' connecte le dispositif mobile 101 au système IVI du véhicule 10, par exemple via un câble reliant le dispositif mobile 101 à un connecteur ou une interface associée au système IVI. Des données 501 sont alors reçues par le calculateur du système IVI 'S_{IVI}', ces données étant représentatives de la connexion du dispositif mobile 101 au système IVI. La réception de ces données génère, par exemple, un contrôle d'affichage sur l'écran 12 du système IVI sur lequel est alors représenté un objet graphique permettant d'activer une fonction de duplication d'écran lorsque l'utilisateur l'active, par exemple via un appui tactile sur cet objet graphique.

Dans une troisième opération, l'utilisateur 'U' active la duplication d'écran entre l'écran 12 du système IVI et l'écran 101e du dispositif mobile en effectuant, par exemple, un appui tactile sur l'objet graphique affiché sur l'écran 12. Des deuxièmes données 502 sont alors reçues par le calculateur IVI 'S_{IVI}' représentatives de cet appui tactile et donc d'une requête d'attribution d'une ressource du système IVI à une application mobile en cours d'exécution sur le dispositif mobile 101, la ressource étant ici l'écran tactile 12.

Dans une quatrième opération, des données 503 représentatives d'une requête de duplication d'écran, donc représentatives de l'attribution de la ressource constituée de l'écran à une application mobile, sont émises par le calculateur IVI 'S_{IVI}' à destination du processeur du dispositif mobile 'DM'.

Un deuxième compteur temporel est alors incrémenté, celui-ci étant associé à un ensemble d'applications mobiles appartenant à une même catégorie d'applications mobiles associées à la diffusion d'un contenu vidéo.

Dans une cinquième opération, des données 504 représentatives d'un flux vidéo sont émises par le processeur du dispositif mobile 'DM' à destination du calculateur IVI 'S_{IVI}', le système IVI passe alors dans un premier état E1 selon lequel l'écran 12 diffuse des images correspondant à celles affichées sur l'écran 101e du dispositif mobile 101.

Dans une sixième opération, l'utilisateur 'U' enclenche une marche arrière sur le véhicule 10, lequel est équipé, selon ce deuxième exemple de réalisation particulier, d'une caméra de recul. Le système IVI nécessite alors l'utilisation de l'écran 12 pour projeter une image représentative de l'environnement situé à l'arrière du véhicule 10. Ainsi, des cinquièmes données 505 représentatives d'une requête de préemption de la ressource, ici l'écran 12, sont reçues depuis le système IVI. La ressource, ici l'écran 121, est alors attribuée au système IVI.

Par conséquent, dans une septième opération, des troisièmes données 506 représentatives d'une fin d'attribution de la ressource à l'application mobile en cours d'exécution sont transmises par le calculateur IVI 'S_{IVI}' au processeur 'DM' du dispositif mobile et l'incrémentation du deuxième compteur temporel est arrêté. Le processeur 'DM' du dispositif mobile émet alors des données 507 représentative d'une fin de diffusion de vidéo à destination du calculateur IVI 'S_{IVI}'.

Le système IVI passe alors dans un deuxième état E2 selon lequel l'écran 12 diffuse des images correspondant à celles transmises par la caméra de recul du véhicule 10.

Dans une huitième opération, l'utilisateur 'U' enclenche la marche avant sur le véhicule 10. Le système IVI ne nécessite donc plus l'utilisation de l'écran 12 pour projeter une image représentative de l'environnement situé à l'arrière du véhicule 10. Ainsi, des sixièmes données 508 représentatives d'une fin de requête de préemption de la ressource, ici l'écran 12, sont reçues depuis le système IVI. En d'autres termes, ces sixièmes données 508 sont représentatives d'une fin d'attribution de la ressource au système IVI. La ressource, ici l'écran 121, est alors libre d'être à nouveau attribuée à l'application en cours d'exécution sur le dispositif mobile 101.

Dans une neuvième opération, la ressource est réattribuée à l'application mobile et des données 509 représentatives d'une requête de duplication d'écran, donc représentatives de l'attribution de la ressource constituée de l'écran à l'application mobile en cours d'exécution sur le dispositif mobile 101, sont émises par le calculateur IVI 'S_{IVI}' à destination du processeur du dispositif mobile 'DM'. Le deuxième compteur temporel est alors à nouveau incrémenté, les temps d'attribution de la ressource à l'application mobile en cours d'exécution sur le dispositif mobile sont alors additionnés.

Dans une dixième opération, des données 510 représentatives d'un flux vidéo sont émises par le processeur du dispositif mobile 'DM' à destination du calculateur IVI 'S_{IVI}', le système IVI passe alors dans un troisième état E3 similaire au premier état E1 selon lequel l'écran 12 diffuse des images correspondant à celles affichées sur l'écran 101e du dispositif mobile 101.

Dans une onzième opération, des troisièmes données représentatives d'une fin d'attribution de la ressource à l'application mobile en cours d'exécution sur le dispositif mobile 101 sont reçues. L'incrémentation du deuxième compteur temporel est alors arrêtée. La valeur du deuxième compteur temporel est, par exemple, enregistrée dans une mémoire du système IVI.

Dans une douzième opération, des quatrièmes données représentatives d'une fin du trajet sont reçues, par exemple lorsque le trajet est terminé et que le conducteur du véhicule coupe le contact ou éteint un moteur du véhicule 10.

L'incrémentation du premier compteur temporel est alors arrêtée. La valeur du premier compteur temporel est, par exemple, elle aussi enregistrée dans la mémoire du système IVI.

Optionnellement, dans une treizième opération, les valeurs des premier et deuxième compteurs temporels sont transmises à un serveur distant par le calculateur du système IVI 'S_{IVI}' via le système de communication du véhicule 10. Un tel serveur distant permet alors de récupérer et de centraliser des données représentatives de temps d'utilisation d'un ensemble d'applications mobiles appartenant à une même catégorie d'applications mobiles durant des trajets effectués par des véhicules d'un ensemble de véhicules comprenant le véhicule 10.

Dans une quatorzième opération, le taux d'utilisation de l'ensemble d'applications mobiles comprenant l'application mobile en cours d'exécution sur le dispositif mobile 101 est déterminé pour le trajet effectué par le véhicule 10. Ce taux est par exemple égal au ratio entre la valeur du deuxième compteur temporel et la valeur du premier compteur temporel. Cette neuvième opération est réalisée soit par le calculateur IVI 'S_{IVI}' du véhicule 10, soit par le serveur distant si les valeurs des premier et deuxième compteurs temporels lui sont transmises durant la huitième opération.

Dans le cas où la treizième opération n'a pas été réalisée, c'est-à-dire que les valeurs des premier et deuxième compteurs temporels n'ont pas été transmises au serveur distant, le taux calculé par le calculateur IVI 'S_{IVI}' est, par exemple, transmis au serveur distant dans une quinzième opération.

Un tel processus permet, alors de mieux connaître le besoin d'un utilisateur, notamment ses attentes quant à certaines fonctionnalités, lesquelles sont assurées par des applications installées sur un dispositif mobile. La connaissance de ce besoin ou de ces attentes permet alors de mieux cerner les axes de développement des fonctionnalités du système IVI de manière à développer ou mettre à jour les systèmes IVI équipant les véhicules. Des fonctionnalités assurées par le système IVI lui-même sont alors plus facilement accessibles pour l'utilisateur.

De plus, la connaissance des besoins en ressources des applications mobiles permet d'améliorer à la fois l'interface entre le dispositif mobile et le système IVI et la mise à disposition de ressources répondant aux attentes d'un utilisateur.

La figure 2 illustre schématiquement un dispositif 2 configuré pour déterminer un taux d'utilisation d'un ensemble d'applications d'une catégorie d'applications durant un trajet effectué par un véhicule, par exemple du véhicule 10. Le dispositif 2 correspond par exemple à un dispositif embarqué dans le véhicule 10, par exemple un calculateur du système IVI, ou à un serveur distant relié en communication avec le système IVI du véhicule 10.

Le dispositif 2 est par exemple configuré pour la mise en œuvre des opérations décrites en regard des figure 1, 4 et 5 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage 240, tactile ou non, un ou des haut-parleurs 250 et/ou d'autres périphériques 260 (système de projection) via respectivement des interfaces de sortie 24, 25 et 26. Selon une variante, l'un ou l'autre des dispositifs externes est intégré au dispositif 2.

La figure 3 illustre un organigramme des différentes étapes d'un procédé de détermination d'un taux d'utilisation d'un ensemble d'applications mobiles appartenant à une même catégorie d'applications mobiles durant un trajet effectué par un véhicule, par exemple par le véhicule 10 de la figure 1, le véhicule embarquant une interface de communication configurée pour une communication de données entre un système d'infodivertissement, dit système IVI, du véhicule et un dispositif de communication mobile, par exemple le dispositif de communication mobile 101 de la figure 1, selon un exemple de réalisation particulier et non limitatif de la présente invention. Le procédé est par exemple mis en œuvre par un dispositif embarqué dans le véhicule 10 ou par le dispositif 2 de la figure 2.

Dans une première étape 31, des premières données représentatives d'un début d'un trajet sont reçues un premier compteur temporel associé au trajet est incrémenté.

Dans une deuxième étape 32, des deuxièmes données sont reçues. Les deuxièmes données sont représentatives d'au moins une requête d'attribution d'une ressource du système IVI à une application mobile de l'ensemble d'applications mobiles pour partager des données entre l'application mobile et le système IVI.

Dans une troisième étape 33, la ressource est attribuée à l'application mobile et un deuxième compteur temporel associé à la catégorie d'applications mobiles à laquelle appartient l'application mobile est incrémenté.

Dans une quatrième étape 34, des troisièmes données représentatives d'une fin d'attribution de la ressource à l'application mobile sont reçues et l'incrémentation du deuxième compteur temporel est arrêtée.

Dans une cinquième étape 35, des quatrièmes données représentatives d'une fin du trajet sont reçues et l'incrémentation du premier compteur temporel est arrêtée.

Dans une sixième étape 36, le taux d'utilisation est déterminé à partir des premier et deuxième compteurs temporels.

Selon une variante, les variantes et exemples des opérations décrits en relation avec les figures 1, 4 et 5 s'appliquent aux étapes du procédé de la figure 3.

Bien entendu, la présente invention ne se limite pas aux exemples de réalisation décrits ci-avant mais s'étend à un procédé de détermination d'un taux d'utilisation d'un ensemble d'applications mobiles appartenant à une même catégorie d'applications mobiles durant un trajet effectué par un véhicule d'un système comprenant le véhicule et un dispositif de communication mobile qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile, comprenant le dispositif 2 de la figure 2.

La présente invention concerne également un système comprenant le véhicule 10 et le dispositif de communication mobile 101 relié en communication au véhicule 10.

## Revendications

1. Procédé de détermination d'un taux d'utilisation d'un ensemble d'applications mobiles appartenant à une même catégorie d'applications mobiles durant un trajet effectué par un véhicule (10), un dispositif mobile (101) étant relié en communication avec un système d'infodivertissement, dit système IVI, du véhicule, ledit dispositif mobile (101) étant configuré pour exécuter des applications dudit ensemble d'applications mobiles,
ledit procédé étant mis en œuvre par au moins un processeur et étant **caractérisé en ce qu'**il comprend les étapes suivantes :
- réception (31) de premières données représentatives d'un début dudit trajet et incrémentation d'un premier compteur temporel associé audit trajet ;
- réception (32) de deuxièmes données représentatives d'au moins requête d'attribution d'une ressource du système IVI à une application mobile dudit l'ensemble d'applications mobiles pour partager des données entre ladite application mobile et le système IVI ;
- attribution (33) de ladite ressource à ladite application mobile et incrémentation d'un deuxième compteur temporel associé à ladite catégorie d'applications mobiles ;
- réception (34) de troisièmes données représentatives d'une fin d'attribution de ladite ressource à ladite application mobile et arrêt de l'incrémentation dudit deuxième compteur temporel ;
- réception (35) de quatrièmes données représentatives d'une fin dudit trajet et arrêt de l'incrémentation dudit premier compteur temporel ;
- détermination (36) dudit taux d'utilisation à partir des premier et deuxième compteurs temporels.

2. Procédé selon la revendication 1, comprenant en outre une transmission dudit taux d'utilisation et/ou des premier et deuxième compteurs temporels à destination d'un serveur distant.

3. Procédé selon la revendication 1 ou 2, pour lequel, lorsque les deuxièmes données sont représentatives d'une pluralité de requêtes d'attribution d'une ressource dudit système IVI, les étapes d'attribution (33) de ladite ressource et de réception (34) de troisièmes données sont répétées pour chaque requête de ladite pluralité.

4. Procédé selon l'une des revendications 1 à 3, pour lequel ladite catégorie d'applications appartient à un ensemble de catégories d'applications comprenant :
- une catégorie d'applications associées à une navigation,
- une catégorie d'applications associées à une diffusion d'un contenu médiatique vidéo et/ou audio,
- une catégorie d'applications associées à une reconnaissance vocale.

5. Procédé selon l'une des revendications 1 à 4, pour lequel les ressources appartiennent à un ensemble de ressources comprenant :
- un écran tactile,
- un système de diffusion audio,
- un microphone.

6. Procédé selon l'une des revendications 1 à 5, comprenant en outre les étapes suivantes :
- réception de cinquièmes données représentatives d'une requête de préemption de ladite ressource depuis ledit système IVI ;
- attribution de ladite ressource audit système IVI et arrêt de l'incrémentation du deuxième compteur temporel ;
- réception de sixièmes données représentatives d'une fin d'attribution de ladite ressource au système IVI ;
- réattribution de la ressource à l'application mobile et incrémentation du deuxième compteur temporel.

7. Programme d'ordinateur comportant des instructions pour la mise en œuvre du procédé selon l'une quelconque des revendications 1 à 6, lorsque ces instructions sont exécutées par au moins un processeur.

8. Dispositif (2) de détermination d'un taux d'utilisation d'un ensemble d'applications d'une catégorie d'applications durant un trajet effectué par un véhicule (10), ledit dispositif (2) comprenant une mémoire (21) associée à au moins un processeur (20) configuré pour la mise en œuvre des étapes du procédé selon l'une quelconque des revendications 1 à 6.

9. Véhicule (10) comprenant le dispositif (2) selon la revendication 8.

10. Système comprenant le véhicule selon la revendication 9 et un dispositif de communication mobile (101) relié en communication audit véhicule (10).
